# EUROPEAN PATENT APPLICATION

(11) **EP 4 696 424 A1**
(43) Date of publication of application: **18.02.2026**
(21) Application number: 23932924.6
(22) Date of filing: 10.04.2023
(51) Int. Cl.: B08B 3/04, B08B 3/10

(54) **PET FLAKE CLEANING APPARATUS AND PET FLAKE CLEANING METHOD**

(71) Applicant: Japantech Co., Ltd., Kanuma-shi, Tochigi 322-0302 (JP)
(72) Inventor: FURUSAWA, Eiichi, Kanuma-shi, Tochigi 322-0302 (JP)
(74) Representative: v. Bezold & Partner Patentanwälte - PartG mbB
(86) International application number: PCT/JP2023/014548
(87) International publication number: WO 2024/214142

(57) **Abstract**

An object of the present disclosure is to provide a PET flake washing apparatus and a PET flake washing method capable of obtaining sufficiently washed recycled PET flakes under conditions where PET flakes obtained from commercial PET bottles are included, and even under conditions where only PET flakes obtained from commercial PET bottles are used. A PET flake washing apparatus 100 according to the present disclosure includes: a batch washing tank 6 including a first feeding part 1 for feeding a washing solution and crushed PET flakes as washing targets 50, a first container 2, a first stirrer 3, a first discharge port 4, and an opening and closing tool 5 for the first discharge port; a supply device 7 positioned further downstream than the batch washing tank and supplying a predetermined portion of the washing targets washed in the batch washing tank per unit time; and a continuous washing tank 12 including a second feeding part 8 into which a washing solution and washing targets are fed, a second discharge port 9, a washing flow path 10 connecting the second feeding part and the second discharge port, and a second stirrer 11.

## Description

### Technical Field

The present disclosure relates to an apparatus for washing PET flakes obtained from collected used plastic bottles and a method of washing the PET flakes.

### Background Art

Plastic bottles such as plastic containers made of polyethylene terephthalate (PET) (PET bottles) are widely used for holding beverages, foods, and the like. In recent years, recycled products such as recycled plastic bottles and recycled fibers have been produced from collected used plastic bottles.

The collected used plastic bottles include, in addition to PET bottles that are separately discharged from homes and separately collected by municipalities (referred to as municipal PET bottles. See, for example, Non Patent Literature 1.), PET bottles that are discharged from and collected by vending machines, offices, supermarkets and convenience stores, railway companies, public facilities, and the like (referred to as commercial PET bottles. See, for example, Non Patent Literature 2.). On the one hand, PET bottles discharged from homes are separately collected by municipalities in principle under the Container and Packaging Recycling Act, on the other hand, in regard to commercial PET bottles, used PET bottles are recycled under the responsibility of the business operators.

In order to reuse waste PET, such as collected used plastic bottles, as resources, there are techniques related to a washing method and a washing apparatus for washing cut and crushed PET flakes (For example, see Patent Literature 1.). Patent Literature 1 discloses a method of washing recycled PET flakes, the method including: a separation and washing step of stirring fed PET flakes in hot washing water to give a mechanical rubbing action; a rinsing step of pulling up the PET flakes, gone through the separation and washing step, from the hot washing water and giving a mechanical beating action by spraying water to rinse the PET flakes; and a dewatering and drying step of blowing air into the PET flakes, gone through the rinsing step, to perform dewatering and drying. Here, this patent literature discloses the following mode: in the separation and washing step, a mechanical rubbing action is applied to the PET flakes in a plurality of washing tanks, partitioned by a partition plate, the lower parts of which communicate with each other.

### Citation List

### Patent Literature

Patent Literature 1: JP 2002-320932 A

### Non Patent Literature

Non Patent Literature 1: URL; https://www.petbottlerec.gr.jp/more/sort.html
Non Patent Literature 2: URL; https://www.petbottlerec.gr.jp/more/about.html

### Summary of Invention

### Technical Problem

Recycling used plastic bottles requires sufficient removal of foreign matters. Since municipal PET bottles are used plastic bottles separately discharged from homes, many of them have minor contamination, and it can be said that clean PET flakes are easily obtained by the washing method disclosed in Patent Literature 1 or the like. In contrast, since commercial PET bottles are discharged from various facilities and collected through various routes, the commercial PET bottles have a proportion of heavily contaminated PET bottles higher than the municipal PET bottles have. Therefore, in order to obtain recycled PET flakes (recycled PET flakes) from commercial PET bottles, the method of washing PET flakes applied to municipal PET bottles is insufficient.

In view of the above, an object of the present disclosure is to provide a PET flake washing apparatus and a PET flake washing method capable of obtaining sufficiently washed recycled PET flakes under conditions where PET flakes obtained from commercial PET bottles are included, in addition to PET flakes obtained from municipal PET bottles, and even under conditions where only PET flakes obtained from commercial PET bottles are used.

### Solution to Problem

As a result of intensive studies to solve the above problems, the present inventor has found that the above problems can be solved by combining different washing methods in which PET flakes are first washed in a batch washing tank and subsequently re-washed in a continuous washing tank, and have completed the present invention. That is, a PET flake washing apparatus according to the present invention includes: a batch washing tank including a first feeding part for feeding an alkali as a washing solution and crushed PET flakes as washing targets, a first container for storing the washing solution and the washing targets that have been fed from the first feeding part, a first stirrer for stirring the washing solution and the washing targets in the first container, a first discharge port for discharging the washing solution and the washing targets in the first container, and an opening and closing tool for the first discharge port; a supply device positioned further downstream than the batch washing tank and supplying a predetermined portion of the washing targets washed in the batch washing tank per unit time; and a continuous washing tank including a second feeding part into which a washing solution and the washing targets supplied from the supply device are fed, a second discharge port for discharging the washing targets and the washing solution that have been fed, a washing flow path connecting the second feeding part and the second discharge port, and a second stirrer for stirring the washing targets and the washing solution in the washing flow path.

In the PET flake washing apparatus according to the present invention, the batch washing tank is preferably a plurality of batch washing tanks arranged in parallel, the PET flake washing apparatus preferably further includes an extraction tank for temporarily storing the washing solution and the washing targets discharged from each first discharge port, and a capacity of the extraction tank is preferably larger than a maximum amount of the capacities of the plurality of batch washing tanks. The predetermined portion of the washing targets discharged from the batch washing tank can be easily supplied per unit time and forwarded to the continuous tank.

In the PET flake washing apparatus according to the present invention, the supply device is preferably a turbo washer that is positioned further downstream than the extraction tank, and that washes the washing targets washed in the batch washing tank while rubbing the washing targets. Since the flakes washed in the batch washing tank are in a state where dirt floats, the washing performance can be enhanced by performing rubbing washing. In addition, the washing solution can be easily switched to a washing solution in the continuous washing tank in the downstream process.

The PET flake washing apparatus according to the present invention preferably further includes a first dehydrator between the extraction tank and the turbo washer, a receiving tank positioned further downstream than the continuous washing tank, and a second dehydrator positioned further downstream than the receiving tank, and the first dehydrator preferably has a lower dehydration capability than that of the second dehydrator. The amount of the washing solution carried over from the batch washing tank to the continuous washing tank can be reduced, and the washing performance in the turbo washer can be improved. In addition, the washing solution can be reliably removed from the continuous washing tank, and the load of the downstream rinsing step can be reduced. Furthermore, the first dehydrator having the dehydration capability lower than that of the second dehydrator can improve the washing performance in the turbo washer and shorten the entire washing time.

In the PET flake washing apparatus according to the present invention, the washing solution fed into the first feeding part preferably circulates through a first circulation path for letting the washing solution, separated from the first dehydrator, flow, and the washing solution fed into the second feeding part preferably circulates through a second circulation path for letting the washing solution, separated from the second dehydrator, flow. Getting the first circulation path and the second circulation path being separate paths can enhance the washing performance of the washing solution in the second circulation path. Therefore, rinsing is also facilitated.

In the PET flake washing apparatus according to the present invention, the continuous washing tank preferably includes n (where n is an integer being 2 or more) tubular containers arranged in parallel; a first tubular container is preferably equipped with the second feeding part in a side wall upper part or a top surface part, and preferably includes a liquid outlet in a side wall lower part; an n^{th} tubular container preferably includes a liquid intake, in a side wall upper part, connected to the liquid outlet installed in a side wall lower part of an adjacent tubular container, via a relay flow path, and preferably includes a liquid outlet in a side wall lower part; a flow path connecting the second feeding part, an inside of the first tubular container, the liquid outlet of the first tubular container, the relay flow path, the liquid intake of the n^{th} tubular container, an inside of the n^{th} tubular container, the liquid outlet of the n^{th} tubular container, and the second discharge port preferably forms the washing flow path; each of the tubular containers preferably includes stirring blades fixed to a stirring shaft as the second stirrer; the stirring blades preferably include a blade that generates an upward flow and a blade that generates a downward flow; the blade 24a that generates an upward flow and the blade 24b that generates a downward flow are preferably alternately arranged along the axial direction of the stirring shaft; and each of the tubular containers preferably includes a frame part annularly protruding from a container inner wall at a position above the liquid outlet. Even in regard to the continuous washing tank, insufficiently washed PET flakes can be prevented from being partially discharged early from the continuous washing tank.

A method of washing PET flakes according to the present invention includes a first washing step of storing PET flakes crushed as washing targets together with an alkali as a washing solution, and washing the PET flakes while stirring the PET flakes for a predetermined time in a batch washing tank, and a second washing step of washing the PET flakes washed in the batch washing tank with a predetermined portion of the PET flakes transformed to a continuous washing tank per unit time.

### Advantageous Effects of Invention

The present disclosure can provide a PET flake washing apparatus and a PET flake washing method capable of obtaining sufficiently washed recycled PET flakes under conditions where PET flakes obtained from commercial PET bottles are included, in addition to PET flakes obtained from municipal PET bottles, and even under conditions where only PET flakes obtained from commercial PET bottles are used.

### Brief Description of Drawings

Fig. 1 is a process chart illustrating a flow until production of recycled PET flakes from collected PET bottles.
Fig. 2 is a schematic diagram of a PET flake washing apparatus according to the present embodiment.
Fig. 3 is a schematic diagram of a batch washing apparatus.
Fig. 4 is a schematic diagram of an extraction tank.
Fig. 5 is a schematic diagram of a first dehydrator.
Fig. 6 is a schematic diagram of a turbo washer.
Fig. 7 is a schematic diagram of a continuous washing apparatus.
Fig. 8 is a schematic diagram of a receiving tank.
Fig. 9 is a schematic diagram of a second dehydrator.

### Description of Embodiments

Hereinafter, the present invention will be described in detail with reference to an embodiment, but the present invention is not construed as being limited to these descriptions. The embodiment may be variously modified as long as the effects of the present invention are exhibited.

### <Overall Flow of Process of Producing Recycled PET Flake>

### (1) Flake pre-washing process 45

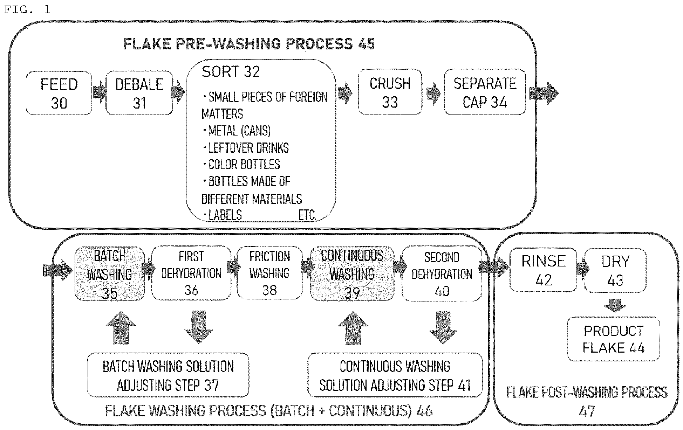

A process of producing recycled PET flakes will be described with reference to Fig. 1. As collected PET bottles, municipal PET bottles or commercial PET bottles are prepared. In any case, a plurality of PET bottles are bundled to facilitate handling at the time of conveyance. First, municipal PET bottles or commercial PET bottles are fed into a line (feeding step 30). Municipal PET bottles and commercial PET bottles may be fed without distinction. Next, the fed PET bottles that are bundled are separated into individual bottles (debaling step 31). Since municipal PET bottles or commercial PET bottles contain contaminants such as small pieces of foreign matters, metal (cans), leftover drinks, color bottles, bottles made of different materials (for example, bottles made of vinyl chloride), and labels in addition to PET bottles, only PET bottles are selected by sorting (sorting step 32). Next, PET bottles are finely crushed using a PET bottle crushing device to obtain pre-washed flakes (crushing step 33). Next, caps are separated (cap separation step 34). The process until this point is the flake pre-washing process 45. Note that the sorting step may be subdivided into several steps, and the order may be changed in the flake pre-washing step. For example, label removal may be performed after the crushing step 33.

### (2) Flake washing process 46

A Flake washing process 46 includes batch washing and continuous washing. That is, the method of washing PET flakes according to the present embodiment includes a first washing step of storing PET flakes crushed as washing targets together with an alkali as a washing solution, and washing the PET flakes while stirring the PET flakes for a predetermined time in a batch washing tank, and a second washing step of washing the PET flakes washed in the batch washing tank with a predetermined portion of the PET flakes transformed to a continuous washing tank per unit time.

### [First washing step]

The pre-washing flakes are first fed into a batch washing apparatus (batch washing step 35). Next, a dehydration step of separating the washing solution from the PET flakes washed in the batch washing step 35 is performed (first dehydration step 36). The washing solution used in the batch washing step 35 and the first dehydration step 36 is preferably circulated while foreign substances are removed and the alkali concentration is kept constant (batch washing solution adjusting step 37). The washing solution and the washing targets are fed so that the slurry ratio becomes 5 mass% to 25 mass%. The washing solution is, for example, an alkali having a concentration ranging from 1% to 10%. The washing solution is heated to, for example, 70°C to 98°C. The washing time for the batch washing is, for example, 10 minutes to 100 minutes. The alkali is preferably sodium hydroxide, and may contain an antifoaming agent, a surfactant, or the like as an additive to an extent that does not matter with regard to utilization for a food container.

### [Second washing step]

Since the dehydrated PET flakes are in a state where a washing solution adheres thereto and dirt floats, before being sent to the washing apparatus of a continuous washing step 39 that is the next step, conveying the PET flakes thereto in parallel with rubbing can improve the washing performance (friction washing step 38). With respect to recycled PET flakes of municipal PET bottles, washed recycled PET flakes can be obtained through batch washing. With respect to recycled PET flakes of commercial PET bottles, continuous washing is performed in order to obtain recycled PET flakes that are safely and reliably washed. The PET flakes gone through the friction washing step 38 are fed into a continuous washing apparatus. While the PET flakes pass through the washing flow path filled with a washing solution kept at a predetermined condition, washing is performed again (continuous washing step 39). In this regard, in order to prevent some of the PET flakes from taking a shorter time to pass through the washing flow path than other PET flakes, providing a means for inhibiting uniform flow, such as providing a passage where directions of flow are changed, in the washing flow path, to bring about stirring in the flow path cross-sectional direction, providing a passage where cross-sectional areas of the flow path are changed to bring about stirring in the front-back direction along the flow direction, and further providing a stirring blade or a stirring plate to generate turbulent flow, are preferable, so that all the PET flakes are washed to the same extent. After the re-washing, the washing solution is dehydrated (second dehydration step 40). The washing solution used in the continuous washing step 39 and the second dehydration step 40 is preferably circulated while foreign substances are removed and the alkali concentration is kept constant (continuous washing solution adjusting step 41). The washing solution and the washing targets are fed so that the slurry ratio becomes 5 mass% to 25 mass%. The washing solution is, for example, an alkali having a concentration ranging from 1% to 10%. The washing solution is heated to, for example, 70°C to 98°C. The washing time for the continuous washing is, for example, 10 minutes to 100 minutes. The alkali is preferably sodium hydroxide, and may contain an antifoaming agent, a surfactant, or the like as an additive to an extent that does not matter with regard to utilization for a food container. Conditions of the washing solution and the washing targets are preferably the same in the first washing step and the second washing step except for the washing time.

### (3) Flake post-washing process 47

The washed flakes gone through the second dehydration step are rinsed to remove the washing solution (rinsing step 42) and dried (drying step 43) to obtain recycled PET flakes (product flake step 44).

### <PET Flake Washing Apparatus>

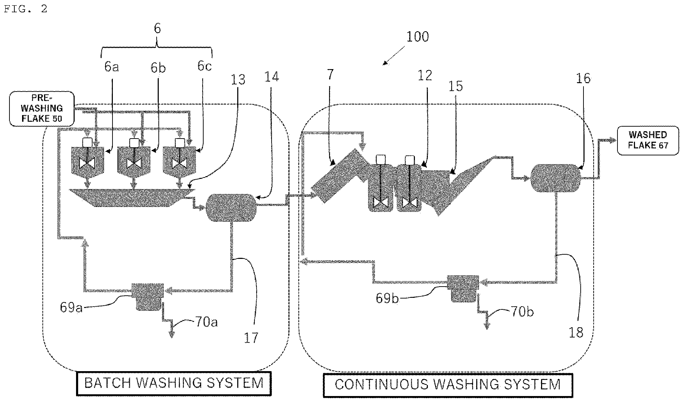

Next, a PET flake washing apparatus 100 according to the present embodiment used in the flake washing process 46 will be described with reference to Figs. 2 to 9. A PET flake washing apparatus 100 according to the present embodiment includes: a batch washing tank 6 including a first feeding part 1 for feeding an alkali as a washing solution and crushed PET flakes as washing targets, a first container 2 for storing the washing solution and the washing targets that have been fed from the first feeding part 1, a first stirrer 3 for stirring the washing solution and the washing targets in the first container 2, a first discharge port 4 for discharging the washing solution and the washing targets in the first container 1, and an opening and closing tool 5 for the first discharge port 4; a supply device 7 positioned further downstream than the batch washing tank 6 and supplying a predetermined portion of the washing targets washed in the batch washing tank 6 per unit time; and a continuous washing tank 12 including a second feeding part 8 into which a washing solution and the washing targets supplied from the supply device are fed, a second discharge port 9 for discharging the washing targets and the washing solution that have been fed, a washing flow path 10 connecting the second feeding part 8 and the second discharge port 9, and a second stirrer 11 for stirring the washing targets and the washing solution in the washing flow path 10.

### (1) Batch washing system

### [Batch washing tank]

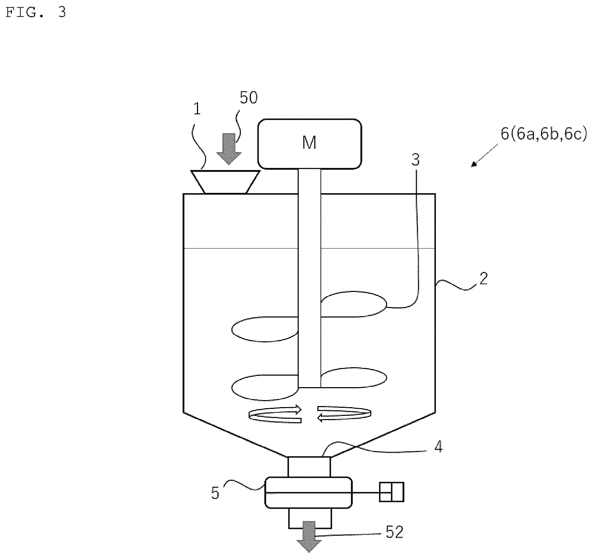

As illustrated in Figs. 2 and 3, the first feeding part 1 for feeding the pre-washing PET flakes as washing targets 50 and a washing solution is installed in an upper part of the first container 2 of the batch washing tank 6. The first stirrer 3 is rotated by a motor to stir the washing solution and the washing targets stored in the first container 2. The bottom of the first container 1 is equipped with the first discharge port 4 for discharging the washing solution and the washing targets that have been stirred and washed, and is further quipped with the opening and closing tool 5 for the first discharge port 4, below the first discharge port 4. After washing the washing targets with the washing solution under a predetermined condition for a predetermined time, the opening and closing tool 5 is opened, and the washing solution and washing targets 52 are discharged toward the subsequent process. The opening and closing tool 5 is preferably of a slider type that is opened and closed by sliding a plate. Clogging of the washing targets 52 is prevented. The batch washing tank 6 is preferably a plurality of batch washing tanks arranged in parallel as batch washing tanks 6a, 6b, and 6c illustrated in Fig. 2. The respective first containers of the batch washing tanks 6a to 6c may have different capacities from each other, but preferably have equal capacities. The batch washing tank 6 preferably includes a heater (for example, a steam heating system) not illustrated.

### [Extraction Tank]

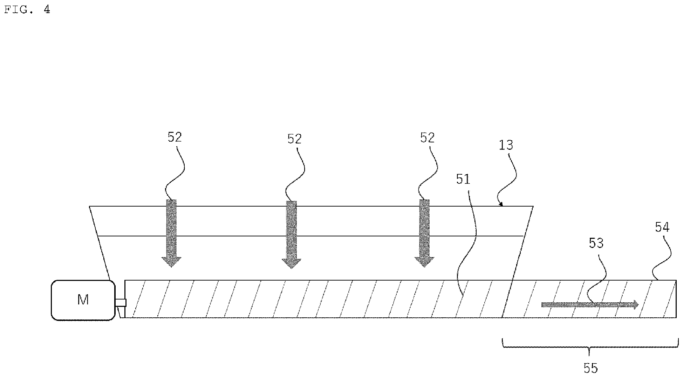

As illustrated in Figs. 2 and 4, an extraction tank 13 is installed below the batch washing tank 6, and temporarily stores the washing solution and the washing targets 52 that are discharged from the first discharge port 4. When a plurality of batch washing tanks are arranged in parallel like the batch washing tanks 6a, 6b, and 6c, the washing solution and the washing targets 52 that are discharged from the respective first discharge ports 4 are stored in the extraction tank 13. A screw conveyor 51 is installed on the bottom of the extraction tank 13, and the screw conveyor 51 extends from a side wall of the bottom of the extraction tank 13 to the inside of a connected tubular body 54. The screw conveyor 51 rotated by a motor supplies a predetermined fixed potions of the washing solution and washing targets 53 to the subsequent process per unit time. By increasing the length 55 of the tubular body 54, the substantial inner volume, excluding the volume of the screw conveyor 51 in the tubular body 54, can be increased, so that constant feed of the washing solution and the washing targets 53 can be stabilized. For example, the substantial inner volume in the tubular body 54 is set to 2% to 10% of the volume of the first container 2. The capacity of the extraction tank 13 is preferably larger than a maximum amount of the capacities of the plurality of batch washing tanks when the capacities are different from each other. The washing solution and the washing targets 52 can be temporarily and reliably stored. In regard to taking the washing targets 52 out of the batch washing tank 6, clogging is easily caused by discharge at a low flow rate. Therefore, by using the slider type opening and closing tool 5, clogging is prevented and the discharge efficiency is enhanced. However, dehydration in the first dehydrator and wash in the continuous washing tank in the subsequent process are desirably performed at a constant speed; when the washing targets 52 are discharged from the batch washing tank 6 at once, processes are performed with difficulty. Therefore, the extraction tank 13 adjusts the feed speed of the washing targets and the washing solution in such a direction as to reduce fluctuation in magnitude, thereby adapting the feed speed to the processing speed of the subsequent process.

### [First dehydrator]

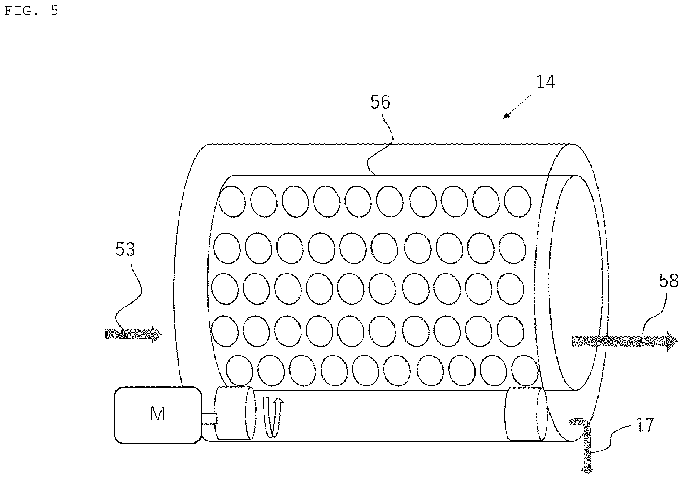

As illustrated in Figs. 2 and 5, the first dehydrator 14 is positioned between the extraction tank 13 and the supply device 7, for example, a turbo washer. In the first dehydrator 14, a cylindrical mesh-like drum 56 having a plurality of openings in a side wall, which is rotated by a motor, is laid in a lateral direction. The washing solution and the washing targets 53 are supplied into the drum 56 via one end side of the cylinder of the drum 56. When the drum 56 rotates, the washing solution moves out of the drum 56 through the opening, and the washing targets 53 move along the rotation axis direction of the drum 56 and reach the other end side of the cylinder of the drum 56. The separated washing solution is transferred to a first circulation path 17 and dehydrated washing targets 58 are discharged toward the subsequent process, by the first dehydrator 14.

### [First circulation path]

As illustrated in Fig. 2, the washing solution fed into the first feeding part 1 together with the pre-washing PET flakes 50 (washing targets 50) circulates through the first circulation path 17 for letting the washing solution, separated from first dehydrator 14, flow. In the first circulation path 17, a vibrating sieve 69a is installed, and a sieve residue 70a is removed by sieving the circulating washing solution. The washing solution that has passed through the vibrating sieve 69a is cleaned, and is fed into the first feeding part 1 again together with the pre-washing PET flakes 50.

### (2) Continuous washing system

### [Supply device]

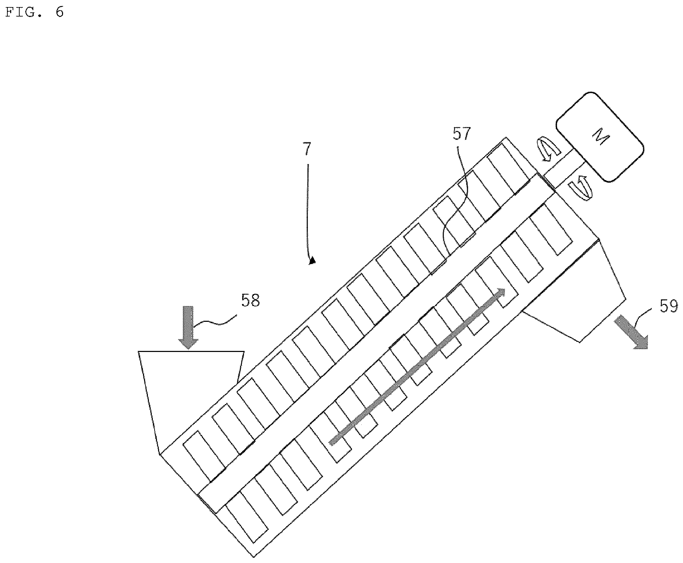

As illustrated in Figs. 2 and 6, the supply device 7 is positioned further downstream than the batch washing tank 6, and supplies a predetermined portion of the washing targets having been washed in the batch washing tank 6, per unit time. The supply device 7 is preferably a turbo washer that is positioned further downstream than the extraction tank 13, preferably positioned further downstream than the first dehydrator 14, and that washes the washing targets having been washed in the batch washing tank 6 while rubbing the washing targets. Since the flakes washed in the batch washing tank are in a state where dirt floats, the washing performance can be enhanced by performing rubbing washing (scrubbing). In addition, in the process after the supply device, it facilitates switching the washing solution to that of the continuous washing tank. The washing targets 58 dehydrated by the first dehydrator 14 are fed into an inlet of a turbo washer that is the supply device 7 as illustrated in Fig. 6. The turbo washer includes a screw-type stirring rod equipped with a plurality of blades attached to a rotation shaft 57, and the stirring rod is rotated by a motor. The stirring rod is inclined obliquely. Then, as a result of rotation of the stirring rod, the PET flakes as the washing targets are sent upward while being rubbed. Here, the turbo washer includes a washing solution supply part that drops the washing solution from the outlet side for the PET flakes, and the washing solution is sent as it is to the continuous washing tank together with the washing targets 59 washed by the turbo washer. The washing solution supplied by the washing solution supply part of the turbo washer is a washing solution circulating through a second circulation path 18, and a washing solution circulating through the second circulation path 18 is used in the process after the turbo washer. At this stage, the slurry concentration is adjusted to a slurry concentration suitable for washing in the continuous washing tank. In Fig. 6, the direction of movement of the washing targets is indicated by an arrow.

### [Continuous washing tank]

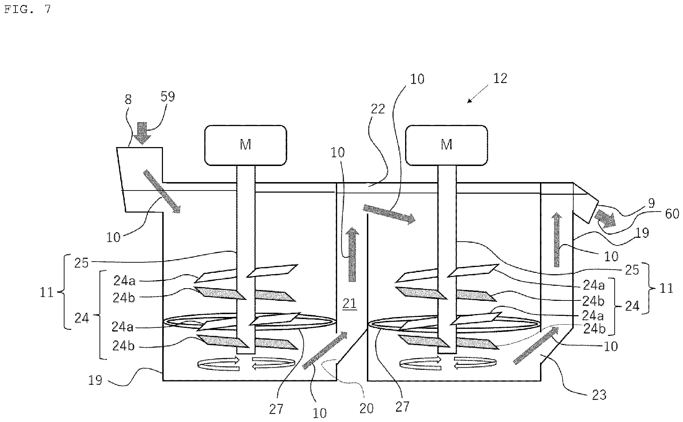

As illustrated in Figs. 2 and 7, the continuous washing tank 12 includes a second feeding part 8 into which a washing solution and washing targets 59 supplied from the supply device 7 are fed, a second discharge port 9 for discharging the fed washing targets 59 and washing solution that have been fed, a washing flow path 10 connecting the second feeding part 8 and the second discharge port 9, and a second stirrer 11 for stirring the washing targets and the washing solution in the washing flow path 10. The second feeding part 8 is installed in an upper part of a tubular container 19. The second discharge port 9 is preferably installed in an upper part or a lower part of the tubular container 19. In a mode in which there is one tubular container 19, the second discharge port 9 is preferably installed in a lower part of the tubular container 19. In a mode in which two or more tubular containers 19 are arranged in parallel, the second discharge port 9 is preferably installed in an upper part of the tubular container 19. The washing flow path 10 is a passage connecting the second feeding part 8 and the second discharge port 9, and the washing flow path 10 is indicated by an arrow 10 in Fig. 7. The second stirrer 11 is set up for stirring the washing targets and the washing solution in the washing flow path 10, and includes, for example, a stirring shaft 25 and stirring blades 24. While the washing targets 59 pass through the washing flow path 10, the washing targets are stirred together with the washing solution, and washing is performed at least during the passage time of the washing flow path 10. The second stirrer 11 prevents some of the washing targets 59 from taking a shorter time to pass through the washing flow path 10 than the others.

By virtue of the continuous washing tank 12 in which the tubular containers 19 are arranged in parallel described below, the passage time of the washing targets 59 through the washing flow path 10 can be longer, and some of the washing targets 59 can be further prevented from taking a shorter time to pass through the washing flow path 10 than the others. This is advantageous to enhancing the washing performance of PET flakes obtained from commercial PET bottles. That is, the continuous washing tank 12 preferably includes n (here, n is an integer being 2 or more, and n = 2 in Fig. 7) tubular containers 19 arranged in parallel; the first tubular container 19 is preferably equipped with the second feeding part 8 in a side wall upper part or a top surface part, and preferably includes a liquid outlet 20 in a side wall lower part; the n^{th} tubular container preferably includes a liquid intake 22, in a side wall upper part, connected to the liquid outlet 20, installed in a side wall lower part of the adjacent tubular container (here, the first tubular container corresponds), via a relay flow path 21, and preferably includes a liquid outlet 23 in a side wall lower part; and a flow path connecting the second feeding part 8, the inside of the first tubular container 19, the liquid outlet 20 of the first tubular container, the relay flow path 21, the liquid intake 22 of the n^{th} tubular container, the inside of the n^{th} tubular container 19, the liquid outlet 23 of the n^{th} tubular container, and the second discharge port 9 preferably forms the washing flow path 10. Each tubular container 19 preferably includes the stirring blades 24 fixed to the stirring shaft 25 as the second stirrer 11; the stirring blades 24 preferably include a blade 24a that generates an upward flow and a blade 24b that generates a downward flow; the blade 24a that generates an upward flow and the blade 24b that generates a downward flow are preferably alternately arranged along the axial direction of the stirring shaft 25. Each tubular container 19 preferably includes a frame part 27 annularly protruding from the container inner wall at a position above the liquid outlet 20 or 23. Even in regard to a continuous washing tank, discharging some flakes insufficiently washed is prevented. The washing flow path 10 is formed in a zigzag shape by arranging the tubular containers 19 in parallel, installing the second feeding part 8 or the liquid intake 22 in a side wall upper part or a top surface part, and installing the liquid outlets 20 and 23 in side wall lower parts. As a result, stirring in the cross-sectional direction of the washing flow path 10 is promoted. Further, by passing through the relay flow path 21, stirring before and after in the flow direction of the washing flow path 10 is promoted. In addition, the washing targets and the washing solution are further stirred by the second stirrer 11 installed in each tubular container 19, that is, the stirring blades 24 fixed to the stirring shaft 25 connected to the motor. Furthermore, by the second stirrer 11 in which the blade 24a that generates an upward flow and the blade 24b that generates a downward flow are alternately arranged along the axial direction of the stirring shaft 25, the washing targets and the washing solution are stirred while a shearing force is generated in the vertical direction of the tubular container 19 and the cross-sectional direction of the stirring shaft 25, so that the washing ability is improved. Furthermore, since the frame part 27 has a structure that annularly protrudes from the container inner wall of the tubular container 19 at a position above the liquid outlet 20 or 23, the frame part 27 functions to keep the washing targets that have been stirred by the stirring blades 24, from easily dropping onto the bottom of the tubular container 19, to keep the washing targets that have once fallen onto the bottom, from easily refloating, and to facilitate extracting the washing targets from the liquid outlet 20. The washing targets are extracted from the liquid outlet 23, further fed upward through a flow path outside the side wall of the tubular container 19, and discharged as washing targets 60 from the second discharge port 9 together with the washing solution.

### [Receiving tank]

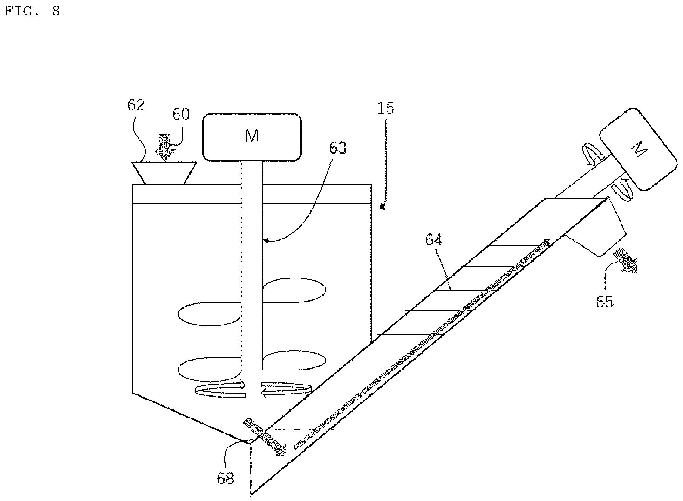

As illustrated in Figs. 2 and 8, a receiving tank 15 positioned further downstream than the continuous washing tank 12 includes a third feeding part 62 in a side wall upper part or a top surface part of the tank. The washing solution and the washing targets 60 discharged from the second discharge port 9 are fed into the third feeding part 62. The receiving tank 15 includes a third stirrer 63, and the washing solution and the washing targets 60 in the tank are stirred, and washing is continued. A third discharge port 68 is installed in a lower part of the receiving tank 15, and the washing solution and the washing targets discharged from the third discharge port 68 are pulled obliquely upward by a screw conveyor 64 to which a motor is connected. The pulled washing solution and washing targets 65 are sent to a second dehydrator 16. The receiving tank 15 supplies the washing solution and the washing targets 65 to the second dehydrator 16 while keeping a constant supply speed. In Fig. 8, the direction of movement of the washing targets is indicated by an arrow.

### [Second dehydrator]

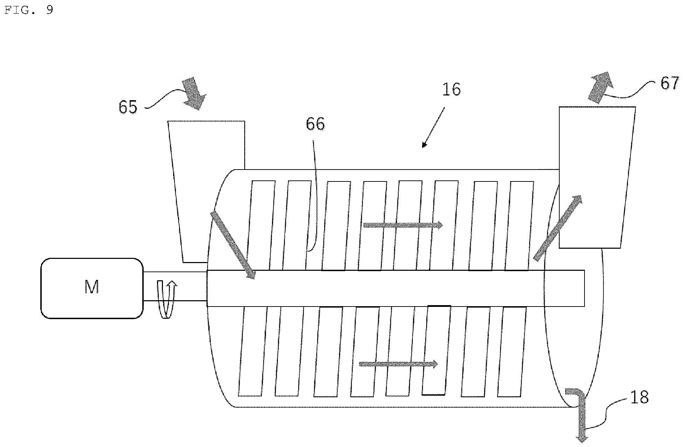

As illustrated in Figs. 2 and 9, the second dehydrator 16 is positioned further downstream than the receiving tank 15. In the second dehydrator 16, a fourth stirrer 66 with stirring blades to be rotated by a motor is installed laterally in a cylindrical container. The washing targets in the cylindrical container are strongly rubbed by the fourth stirrer 66, and dirt is removed. As the fourth stirrer 66 rotates, the washing targets move along the axial direction and reach the other end side. At this side, the washing solution and the washing targets are separated from each other, the washing solution is taken out from a lower part of the cylindrical container laid laterally, and washing targets 67 are taken out from an upper part of the cylindrical container. The separated washing solution is transferred to a second circulation path 18 and the dehydrated washing targets 67 are discharged toward the subsequent process, by the second dehydrator 16. The first dehydrator 14 preferably has a lower dehydration capability than that of the second dehydrator 16. Alternatively, the second dehydrator 16 preferably has a higher dehydration capability than that of the first dehydrator 14. The first dehydrator 14 having the lower dehydration capability than that of the second dehydrator 16 can reduce the amount of the washing solution in the batch washing tank 6 carried over to the continuous washing tank 12 and improve the washing performance in the turbo washer. The second dehydrator 16 having the higher dehydration capability than that of the first dehydrator 14 can reliably remove the washing solution from the continuous washing tank 12 and reduce the load of the downstream rinsing step. The dehydrated washing targets 67 are supplied to a rinsing step 42 in the flake post-washing process 47 that is the next process. In Fig. 9, the direction of movement of the washing targets is indicated by an arrow.

### [Second circulation path]

As illustrated in Fig. 2, the washing solution fed into the supply device 7, such as a turbo washer, circulates through the second circulation path 18 for letting the washing solution, separated from the second dehydrator 16, flow. In the second circulation path 18, a vibrating sieve 69b is installed, and the circulating washing solution is sieved to remove a sieve residue 70b. The washing solution that has passed through the vibrating sieve 69b is cleaned and fed into the supply device 7 again. The first circulation path and the second circulation path may be connected to form one circulation path. However, in the batch washing system, since a large amount of dirt adheres to the fed washing targets 50, the washing solution tends to contain a large amount of dirt. Therefore, the cleanness of the washing solution in the second circulation path can be improved by getting the first circulation path and the second circulation path being separate paths. Therefore, rinsing is also facilitated.

A drainage path for preventing overflow is preferably installed in an upper part of the extraction tank 13, so as to return the solution to the first circulation path. Each drain or drainage path for preventing overflow is preferably installed in the bottom part of the turbo washer, the bottom part of the tubular container 19 of the continuous washing tank 12, and the bottom part and the upper part of the receiving tank 15, so as to return the solution to the second circulation path.

As used throughout this disclosure, the singular forms "a," "an," and "the" include plural reference unless the context clearly dictates otherwise. Thus, for example, a reference to "a composition" includes a plurality of such compositions, as well as a single composition.

### Reference Signs List

- 1: first feeding part
- 2: first container
- 3: first stirrer
- 4: first discharge port
- 5: opening and closing tool
- 6, 6a, 6b, 6c: batch washing tank
- 7: supply device
- 8: second feeding part
- 9: second discharge port
- 10: washing flow path
- 11: second stirrer
- 12: continuous washing tank
- 13: extraction tank
- 14: first dehydrator
- 15: receiving tank
- 16: second dehydrator
- 17: first circulation path
- 18: second circulation path
- 19: tubular container
- 20: liquid outlet
- 22: liquid intake
- 23: liquid outlet
- 24: stirring blade
- 24a: blade that generates an upward flow
- 24b: blade that generates a downward flow
- 25: stirring shaft
- 27: frame part
- 50: pre-washing PET flake
- 51, 64: screw conveyor
- 52, 53, 58, 59, 60, 65, 67: washing target
- 54: tubular body
- 55: length of tubular body
- 56: drum
- 57: rotation shaft
- 62: third feeding part
- 63: third stirrer
- 66: fourth stirrer
- 68: third discharge port
- 69a, 69b: vibrating sieve
- 70a, 70b: sieve residue
- 100: PET flake washing apparatus

## Claims

1. A PET flake washing apparatus comprising:
a batch washing tank including a first feeding part for feeding an alkali as a washing solution and crushed PET flakes as washing targets, a first container for storing the washing solution and the washing targets that have been fed from the first feeding part, a first stirrer for stirring the washing solution and the washing targets in the first container, a first discharge port for discharging the washing solution and the washing targets in the first container, and an opening and closing tool for the first discharge port;
a supply device positioned further downstream than the batch washing tank and supplying a predetermined portion of the washing targets washed in the batch washing tank per unit time; and
a continuous washing tank including a second feeding part into which a washing solution and the washing targets supplied from the supply device are fed, a second discharge port for discharging the washing targets and the washing solution that have been fed, a washing flow path connecting the second feeding part and the second discharge port, and a second stirrer for stirring the washing targets and the washing solution in the washing flow path.

2. The PET flake washing apparatus according to claim 1, wherein
the batch washing tank is a plurality of batch washing tanks arranged in parallel, and the PET flake washing apparatus further comprising an extraction tank for temporarily storing the washing solution and the washing targets discharged from each first discharge port, and
a capacity of the extraction tank is larger than a maximum amount of capacities of the plurality of batch washing tanks.

3. The PET flake washing apparatus according to claim 2, wherein the supply device is a turbo washer that is positioned further downstream than the extraction tank, and that washes the washing targets washed in the batch washing tank while rubbing the washing targets.

4. The PET flake washing apparatus according to claim 3, further comprising:
a first dehydrator between the extraction tank and the turbo washer;
a receiving tank positioned further downstream than the continuous washing tank; and
a second dehydrator positioned further downstream than the receiving tank, wherein
the first dehydrator has a lower dehydration capability than a dehydration capability of the second dehydrator.

5. The PET flake washing apparatus according to claim 4, wherein
the washing solution fed into the first feeding part circulates through a first circulation path for letting the washing solution, separated from the first dehydrator, flow, and
the washing solution fed into the second feeding part circulates through a second circulation path for letting the washing solution, separated from the second dehydrator, flow.

6. The PET flake washing apparatus according to claim 1 or 2, wherein
the continuous washing tank includes n (where n is an integer being 2 or more) tubular containers arranged in parallel;
a first tubular container is equipped with the second feeding part in a side wall upper part or a top surface part, and includes a liquid outlet in a side wall lower part;
an n^{th} tubular container includes a liquid intake, in a side wall upper part, connected to a liquid outlet installed in a side wall lower part of an adjacent tubular container, via a relay flow path, and includes a liquid outlet in a side wall lower part;
a flow path connecting the second feeding part, an inside of the first tubular container, the liquid outlet of the first tubular container, the relay flow path, the liquid intake of the n^{th} tubular container, an inside of the n^{th} tubular container, the liquid outlet of the n^{th} tubular container, and the second discharge port forms the washing flow path;
each of the tubular containers includes stirring blades fixed to a stirring shaft 25 as the second stirrer 11;
the stirring blades include a blade 24a that generates an upward flow and a blade 24b that generates a downward flow;
the blade that generates the upward flow and the blade that generates the downward flow are alternately arranged along an axial direction of the stirring shaft; and
each of the tubular containers includes a frame part annularly protruding from a container inner wall at a position above the liquid outlet.

7. A method of washing PET flakes, the method comprising:
a first washing step of storing PET flakes crushed as washing targets together with an alkali as a washing solution, and washing the PET flakes while stirring the PET flakes for a predetermined time in a batch washing tank; and
a second washing step of washing the PET flakes washed in the batch washing tank with a predetermined portion of the PET flakes transferred to a continuous washing tank per unit time.
